# EUROPEAN PATENT APPLICATION

(11) **EP 3 564 296 A1**
(43) Date of publication of application: **06.11.2019**
(21) Application number: 18198674.6
(22) Date of filing: 04.10.2018
(51) Int. Cl.: C08K 3/22

(54) **ROBUST TRIBOELECTRIC ACTIVE MATERIALS FOR SENSING APPLICATIONS AND METHOD OF MAKING THEM**

(30) Priority: 01.05.2018 US 201862665040 P
(71) Applicant: SABIC Global Technologies B.V., 4612 PX Bergen op Zoom (NL)
(72) Inventor: TEVTIA, Amit Kumar, Thuwal (SA); TAYEB, Mohammed Abdulwahab, Thuwal (SA)
(74) Representative: Elzaburu S.L.P.

(57) **Abstract**

Disclosed are is a composite comprising a polymer resin matrix and an alumina filler, wherein the alumina filler is present in an amount from about 5 wt. % to about 40 wt. % based on the total weight of the composite. The composite may be an element of a triboelectric sensor. The triboelectric sensor may comprise a substrate, a triboelectric active film, wherein the triboelectric active film is formed from the composite comprising polymer resin matrix and an alumina filler, and a conductive film disposed adjacent the substrate. The triboelectric sensor may generate an average of at least 4 V when evaluated using a consistent touch event with a fixed force of about 3.2 ± 0.5 N and connected to an external resistor of 500 MΩ.

## Description

### Technical Field

The disclosure generally relates to triboelectric materials, and more particularly to sensing applications for triboelectric materials.

### Background

Certain electronic devices, such as wireless, portable and multi-functional electronic devices, may require self-sufficient power sources. A number of emerging technologies seek to exploit the abundance of mechanical energy in the environment and human anatomy for mechanical energy harvesting and for building efficient self-powered system. For example, piezoelectric nanogenerators have been developed that convert tiny-scale mechanical energy into electricity. As a further example, triboelectric nanogenerators are based on a contact-electrification effect and harvest mechanical energy through a periodic contact and separation of two polymer plates. Specifically, the triboelectric effect is a type of contact electrification in which certain materials become electrically charged after they come into contact with another material such as through friction. It is the mechanism though which static electricity is generated. Such energy harvesting by converting ambient energy into electricity may offset the reliance of small portable electronics on traditional power supplies, such as batteries. And, where long-term operation of a large number of electronic devices in dispersed locations is required, energy harvesting offers longevity, relatively little maintenance, minimal disposal, and less environmental contamination.

Most triboelectric nanogenerators however have a limited power output. Some electrostatic micro-generators have been developed and used in research relating to micro-electro-mechanical systems (MEMS), but such designs rely on an extra voltage source to charge electrode plates instead of harnessing the triboelectric effect, leading to complicated structures and fabrication processes. Moreover, while a number of different materials, such as fluorinated polymers, exhibit triboelectric properties; conventional materials may be inappropriate for long term use applications and many may suffer under certain environmental conditions such as humidity.

Various methods have been used to develop robust triboelectric materials against oxygen and humidity. For example, in JP 10034821 (1998) a laminated film for packaging electronic devices consisted of an antistatic layer, a biaxially stretched polyethylene terephthalate layer, an aluminum foil, a biaxially stretched nylon layer, and an antistatic polyolefin layer. A gas barrier layer was provided between the biaxially stretched polyethylene terephthalate layer and the biaxially stretched nylon layer. The gas barrier layer was obtained by deposition of aluminum, alumina (Al₂O₃), or silicon dioxide (SiO₂), or a poly(vinylidene chloride) (PVC) layer. The resulting film was protected against static electricity and humid air. In another article, PVC/ halloysite nanotubes (HNT) nanocomposites were prepared by direct melt blending. See, Polyvinyl chloride/halloysite nanotube nanocomposites, Society of plastic engineers, 10.2417/spepro.005273, 2014. The final materials showed improved mechanical properties of the PVC nanocomposites even at low addition rates. The thermal stability of the PVC/HNT nanocomposites appeared more dependent on the HNT content than on the type of preparation and appeared to increase with an increase in the HNT loading.

Among the conventional approaches however, there has yet to be a method of robust triboelectric materials under ambient humidity (such as about 70 %) and excess or elevated temperature such as about 200 °C or greater.

Therefore, there is a need for triboelectric nanogenerators with increased power output.

### Summary

Aspects of the present disclosure relate to a triboelectric active composite.

Further aspects relate to articles comprising the triboelectric active composite such as triboelectric sensors.

### Brief Description of the Drawings

The above-mentioned and other features and advantages of this disclosure, and the manner of attaining them, will become apparent and be better understood by reference to the following description of one aspect of the disclosure in conjunction with the accompanying drawings, wherein:
FIG. 1 shows an example configuration of a triboelectric sensor.
FIG. 2 shows the average voltage vs. film thickness for triboelectric sensors with active materials of PVDC and PVDC-15 wt. % alumina (boehmite & gamma).
FIG. 3 shows average voltage vs. alumina concentration for PVDC-alumina triboelectric sensors at varying amounts of alumina.
FIG. 4 shows average voltage for PVDC-alumina and PVDF-TrFE triboelectric sensors.
FIG. 5 is a graph illustrating the measured voltage as a function of time for 10 wt.% Al₂O₃-PVDC triboelectric device.
FIG. 6 is a thermogravimetric analysis for PVDC materials.
FIG. 7, shows the synthesized alumina-PVDC triboelectrically active materials stability compared against state-of-art materials PVDF-TrFE under finger touch testing up to 20 days.

### Detailed Description

The present disclosure can be understood more readily by reference to the following detailed description of the disclosure and the Examples included therein. It is also to be understood that the terminology used herein is for the purpose of describing particular aspects only and is not intended to be limiting.

Various combinations of elements of this disclosure are encompassed by this disclosure, e.g., combinations of elements from dependent claims that depend upon the same independent claim.

Moreover, it is to be understood that unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is no way intended that an order be inferred, in any respect. This holds for any possible non-express basis for interpretation, including: matters of logic with respect to arrangement of steps or operational flow; plain meaning derived from grammatical organization or punctuation; and the number or type of aspects described in the specification.

Triboelectric based sensors have a several potential applications including human-machine interface, biomedical applications, skin like electronics and others. Triboelectricity is based on the conversion of mechanical energy into electricity via the contact electrification between the positive and negative triboelectric layers and electrostatic induction. They generate small amounts of electrical power from mechanical motion such as rotation, sliding or vibration. The triboelectric effect establishes that certain materials become electrically charged after they come into contact with a surface made from a different material. When two materials, at least one of which is non-conducting, come into contact with each other, a chemical bond, known as adhesion, is formed between the two materials. Depending on the triboelectric properties of the materials, one material may "capture" some of the electrons from the other material. If the two materials are separated from each other, a charge imbalance will occur. The material that captured the electron will be negatively charged and the material that lost an electron will be positively charged. This charge imbalance gives rise to what is often referred to as "static electricity." The term "static" in this case is somewhat deceptive, as it implies a lack of motion when in reality motion is necessary for charge imbalances to flow. The spark one feels upon touching a door knob is an example of such flow. Triboelectric devices/sensors exploit this behavior.

For such triboelectric devices/sensors to work properly, they have to have an active (triboelectric) layer with high output performance as well as stability for the time sufficient for its specific application. Although many different materials exhibit triboelectric properties such as polytetrafluoroethylene (PTFE), nylon, polydimethylsiloxane (PDMS), Polyvinylidene fluoride (PVDF), and polyvinyl chloride (PVC), they might not be appropriate for long-term in-service applications. Polyvinylidene chloride (PVDC) is a good barrier material against water and oxygen, has a very low moisture absorption, and has good thermal stability. Neat PVDC has good electronegativity but with the present disclosure introduces metal oxide (such as alumina) that improves the output performance as well as the barrier properties.

Certain conventional methods have developed triboelectric materials able to withstand oxygen and humidity. Still, conventional methods may not provide robust triboelectric materials under temperature and humidity. The present disclosure provides alumina filled (Al₂O₃) nanocomposites for use as robust triboelectrically active materials. Highly stable gamma-Al₂O₃ has been incorporated to a PVDC polymer resin matrix. The disclosed combination provides enhanced thermal stability of the PVDC polymer.

In various aspects, the disclosure provides a composite, or a nanocomposite, comprising a polymer resin matrix; and an alumina filler. The polymer resin matrix may comprise polyvinyl chloride (PVC), polyvinylidene chloride (PVDC), a crosslinked polycarbonate-Fluorinated polyhedral oligomeric silsesquioxane (XPC-F-POSS), poly(vinylidenefluoride-co-trifluoroethylene, (PVDF-TrFE), polyvinylidene chloride-alumina (PVDC- Al₂O₃), fluorinated-polymers, or a combination thereof. In a specific example, the polymer resin matrix may comprise polyvinylidene chloride.

The disclosed composite may comprise a polymer matrix and a metal oxide such as an aluminum (III) oxide (alumina, Al₂O₃) filler. Alumina is cost effective with an excellent combination of properties like including, but not limited to, hardness, excellent dielectric, resistance to strong acid and alkali attack at elevated temperatures, good thermal conductivity, excellent size and shape capability, and high strength and stiffness. The alumina filler may be present based on a percentage of the total weight of the composite. The alumina may be combined with the polymer matrix dissolved in an appropriate solvent such that the alumina filler is present in an amount as a concentration of the dissolved polymer. As an example, the alumina filler may be present in an amount from about 3 wt. % to about 40 wt. % based on the total weight of the composite. The filler may be present from about 3 wt. % to about 35 wt. %, 5 wt. % to about 35 wt. %, from about 5 wt. % to about 30 wt. %. In further examples, the alumina filler may be present in an amount of about 5 wt. %, about 8 wt. %, about 10 wt. %, about 15 wt. %, about 20 wt. %, about 25 wt. %, about 30 wt. %, about 35 wt. %, or about 40 wt.%. The alumina filler may be present in a range comprising any two of the listed values.

The alumina filler may have a particular average particle size. The alumina comprise a particulate that is nano-particulate sized. The alumina (nano)filler may be a particulate having an average particle size of from about 50 nanometers (nm) to about 1000 nm. In some examples, the alumina filler may have a particle size of from about 500 nm to about 1000 nm.

The alumina filler is dispersed throughout the polymer resin matrix. The alumina filler is dispersed at a surface of the polymer resin.

The alumina filler may comprise a powder as described herein. The aluminum oxide powder may be in the form of particles having a Brunauer-Emmett-Teller (BET) surface area of from about 10 m²/g to about 90 m²/g. The aluminum oxide powder may comprise crystalline phases. The percentage data relate to the sum of the crystalline constituents. The contents of crystalline phases may be determined by X-ray diffraction analysis. Other phases cannot be detected by means of this analytical method.

The alumina filler may be present as one or more phases of alumina. For example, aluminum (III) oxide may be present as the filler in its naturally occurring crystalline polymorphic phase as alpha (α) alumina. In further examples, aluminium oxide may be present in the composite in other phases, including the cubic gamma (γ) and η phases, the monoclinic θ phase, the hexagonal χ phase, the orthorhombic κ phase and the δ phase that can be tetragonal or orthorhombic.

Alpha phase alumina may comprise a lattice structure having hexagonal close-packed structures in which aluminum ions fill two-thirds of octahedral sites due to their small ionic radii (roughly 0.5 angstroms, Å). α-Al₂O₃ has a specific surface area of about 5 square meters per gram (m²/g). In some examples, the composite comprises α-Al₂O₃.

Gamma γ phase alumina may be a very fine-grained alumina having a cubic spinel structure. Gamma phase alumina may readily convert to the α-alumina at certain sintering temperatures (such as for example, temperatures above 1100 °C). Gamma alumina powder may have a high specific surface area of about 100 m²/g. In some examples, the composite comprises γ-Al₂O₃.

Boehmite alumina crystallizes as orthorhombic cells and is composed of AIO(OH) sheets piling up with the oxygen ions located either into the sheets or at their surface. When heating up boehmite, all OH are eliminated, and various transition aluminas are formed with the sequence γ→δ→θ (gamma-delta-theta) to finally reach the most stable α-Al₂O₃ phase. In some examples, the composite comprises boehmite alumina.

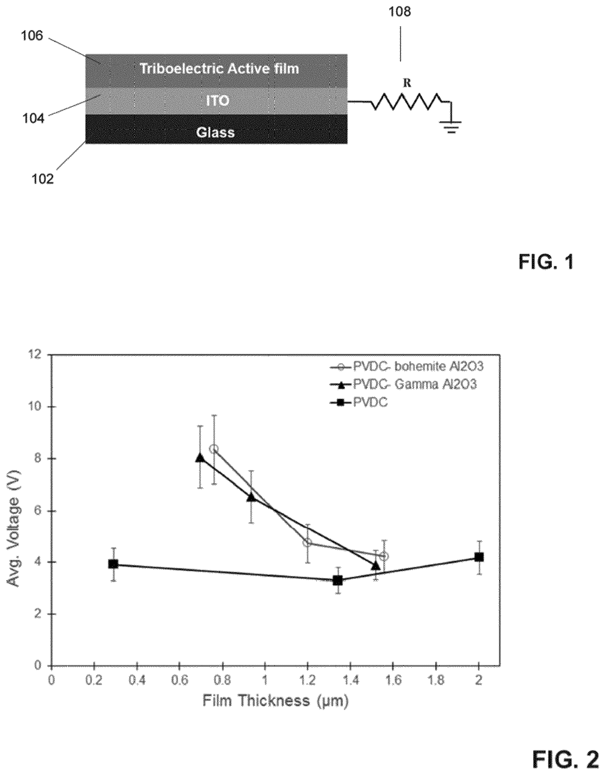

As described herein, the composite may be used to form a triboelectric-active film. Such an apparatus may be created, such as through an exemplary method that includes forming a triboelectric-active film on a substrate; forming a thin film resistor on the substrate; forming a radio-frequency (RF) communications device on the substrate; and/or coupling the radio-frequency (RF) communications device to read-out circuitry and the triboelectric-based sensor through the thin film resistor. The triboelectric-based sensor, such as the sensor presented in FIG. 1, may be formed with at least one triboelectric active film layer on a conductive layer.

FIG. 1 shows a configuration that may be used as a triboelectric sensor 100. The triboelectric sensor may comprise a glass substrate, a conductive layer, and a triboelectric active film. The triboelectric sensor may comprise a substrate 102, such as glass, with a conductive layer 104 deposited thereon to serve as an electrode for a resistor 108. A triboelectric active film (triboelectric layer) 106 may be deposited at the conductive layer 104 and configured to translate applied force at the force sensor into a signal through the resistor 108. In some aspects, the applied force at the force sensor may be user input provided when a user touches the force sensor.

A triboelectric sensor may operate using the triboelectric active film 106 to generate charges that are converted into an electrical signal by the resistor 108, and those electrical signals conveyed to an integrated circuit through a contact pad. Charges may be generated in the triboelectric active film layer upon contact with a material having an opposite electro affinity. For example, charges may be generated when a human finger touches the triboelectric layer as a result of the principle of contact electrification (e.g., tribo-electrification). The power output of the sensor may depend on the load (e.g., resistance) of the system. In some aspects of the triboelectric sensor, the resistors may be formed in a thin film configuration. The signal generated by the triboelectric-based force sensor may be conveyed to a thin film integrated circuit for conditioning and preprocessing before being communicated via near field radio frequency communication to a receiving device, such as a central processing unit (CPU) of a mobile device or any other appropriate reader. The disclosed triboelectric sensor may generate an average of at least 4 V when evaluated using a consistent touch event with a fixed force of about 3.2 ± 0.5 Newtons (N) and connected to an external resistor of 500 megaohms (MΩ).

The triboelectric sensor 100 may include multiple layers of triboelectric material according to one aspect of the disclosure. Multiple triboelectric layers, may enhance the triboelectric effect, and thus may produce signals with higher magnitudes for processing by an integrated circuit coupled to the triboelectric sensor.

In further aspects, the triboelectric active film 106 may be modified. Specifically, the surface of the triboelectric active film may be modified to increase a friction coefficient. The modification may comprise forming a plurality of pillars or microstructures, either similarly- or randomly-sized, on the triboelectric film.

The triboelectric active film of the triboelectric sensor may have a particular thickness. For example, the triboelectric active film may have a thickness of about 0.2 mm to about 2 mm.

Referring again to FIG. 1, any of the sensor configurations described above, or other sensor configurations incorporating a triboelectric active film layer, may be coupled to an integrated circuit for reading out, processing, and transmitting an output signal generated by the sensor. Shown is a glass substrate 102 and an indium tin oxide (ITO) layer as the conductive layer 104. By way of further explanation, the triboelectric sensor 100 may comprise an output terminal configured to output a voltage pulse based on a contact event. The triboelectric sensor 100 may be configured to output a voltage signal (e.g., a change in voltage, a voltage pulse) in response to a contact event. The contact event may comprise any contact, such as contact from a user, with the triboelectric sensor 100. For example, the contact event may comprise a touch event, a press event, and/or the like. The disclosed triboelectric sensor may generate an average of at least 4 V when evaluated using a consistent touch event with a fixed force of about 3.2 ± 0.5 N and connected to an external resistor of 500 MΩ.

As provided above, one or more elements of the triboelectric-active film may be disposed on a substrate. The substrate may be a flexible substrate. For example, the substrate may comprise a thin film substrate. The substrate may have a thickness of from about 500 nanometers (nm) to about 3 millimeters (mm). The substrate may comprise a polymer, such as polyimide, and silicon comprising a layer of polyimide. The triboelectric sensor and other parts, or all of the triboelectric sensor may be flexible. For example, the substrate may comprise at least one of PET, PEN, PC, PMMA, Polyimide, glass; polyethylene terephthalate (PET); polyethylene naphthalate (PEN); polycarbonate (PC); polyetheretherketone (PEEK); polyethersulphone (PES); polyarylate (PAR); polyimide (PI); poly(methyl methacrylate) (PMMA); polycyclic olefin (PCO); cellulose triacetate (TAC); and polyurethane (PU), or another thermoplastic material. The substrate may comprise Polyetherimide, PEN, PET, Polycarbonate, one or more thin sheets of metal, and/or a combination thereof. In some examples, the substrate comprises glass. In some aspects, the substrate may also be transparent or substantially transparent.

Other suitable substrates include encapsulation layers, barrier films, and ultrabarrier films depending upon the desired application of the triboelectric active film. An example of a barrier film is described in U.S. Pat. No. 7,468,211. Ultrabarrier films include multilayer films made, for example, by vacuum deposition of two inorganic dielectric materials sequentially in a multitude of layers on a glass or other suitable substrate, or alternating layers of inorganic materials and organic polymers, as described in U.S. Pat. Nos. 5,440,446; 5,877,895; and 6,010,751. Barrier layers or encapsulation layers could be useful in specific highly moisture sensitive applications where polymer packaging or encapsulation are required.

An element of the triboelectric sensor may comprise a conductive layer or film disposed adjacent a substrate. Suitable examples of materials for the conductive layer may comprise indium tin oxide (ITO), other tin oxides; cadmium oxides (CdSn₂O₄, CdGa₂O₄, CdIn₂O₄, CdSb₂O₆, CdGeO₄); indium oxides (In₂O₃, Ga, GaInO₃(Sn, Ge), (GaIn)₂O₃); zinc oxides (ZnO(Al), ZnO(Ga), ZnSnO₃, Zn₂SnO₄, Zn₂In₂O₅, Zn₃In₂O₆); and magnesium oxides (MgIn₂O₄, MgIn₂O₄-Zn₂In₂O₅). In one example, the conductive layer comprises ITO. The combination of ITO as the conductive layer and glass as the substrate may provide a transparent or substantially transparent triboelectric sensor.

The disclosure describes a variety of novel features, which may in various embodiments include one or more of but are not limited to the following: use of thin film transistors for triboelectric sensors readout circuits, use of oxide semiconductor based thin film transistors for triboelectric touch sensor readout circuits, low temperature process integration, integration of readout circuitry with triboelectric-based touch sensors, elimination of resistors commonly used with triboelectric sensors to produce a read output, custom made triboelectric sensor readout circuit (e.g. elimination of expensive laboratory equipment), readout circuitry with multiple sensing capabilities (e.g., force, touch, press time), mechanically flexible overall system (e.g., elimination of conventional complementary metal-oxide-semiconductor (CMOS) electronics), seamless integration of readout components with flexible triboelectric sensors, use of a buffer layer in the readout circuitry to handle charge accumulation in the triboelectric sensor, all thin film based triboelectric based touch sensor with readout circuitry, and/or the like.

### Methods of Making

In this section, description of the fabrication and characterization of the designed readout circuits for triboelectric sensors is disclosed. Though the following is illustrated using example values, processes, and materials, it is contemplated that other materials, processes, and values may be used according to design specifications.

One example of a method for manufacturing a triboelectric sensor is now described, although other techniques and materials may be used in different aspects of the disclosure.

The triboelectric active film may be formed by combining a polymer resin matrix and a suitable filler. A polymer resin matrix comprising a fluorinated polymer may be combined with an alumina filler. The polymer resin may be dissolved in an appropriate solvent to which the alumina filler in particulate form is added. The resulting mixture may be vigorously mixed to provide a triboelectric-active composite. It is noted that the alumina filler may be dispersed throughout the polymer resin matrix. However, in certain aspects, the alumina filler is dispersed at a surface of the polymer resin. For example, a solution comprising the polymer resin may be prepared and the alumina added with (or followed by) mechanical stirring to disperse homogeneously the alumina fillers. Homogenous or substantially homogenous disperse may be sufficient. Spin coating at varying speeds to form the film may provide the dispersion of the alumina filler at a surface of the polymer resin.

A conductive layer may be disposed at a substrate according to any known methods. The triboelectric-active composite may be deposited at the conductive layer and substrate via known methods. For example, the triboelectric-active composite may be deposited at the conductive layer via a solution coating process.

Alumina filler pellets may be milled, via ball milling for example, to an alumina powder having a desired average particle size. The alumina powder may be combined with the desired polymer in solution. In one example, the polymer (such as PVDC) may be dissolved in a suitable solvent (such as dimethylformamide, DMF) in an amount of about 12 wt. %. The alumina may be present in an amount based on the concentration of the alumina powder in the polymer in solution (for example, from about 3 wt. % to about 40 wt. %). Addition of the alumina to the PVDC matrix may be achieved via rigorous stirring. Such a method may enable the preparation of a triboelectric-active nanocomposite material that is uniform and homogeneous with improved properties. The resulting solution may be spin coated at a surface of an ITO conductive layer and glass substrate prior to curing to form a triboelectric-active film. To provide a triboelectro-active sensor, the triboelectric-active film is combined with an electrode (for example, ITO conductive layer), substrate (for example, glass), and a load-resistor. Further methods may comprise receiving, by a sensing element from a triboelectric sensor, a voltage signal indicative of a contact event. The sensing element may comprise a thin film transistor. The method may comprise supplying, by a load element electrically coupled to the sensing element, a load to the sensing element. The triboelectric sensor, the sensing element, and the load element may be disposed on a flexible substrate. The method may comprise outputting, by the sensing element, an output signal indicative of the contact event.

### Properties and Articles

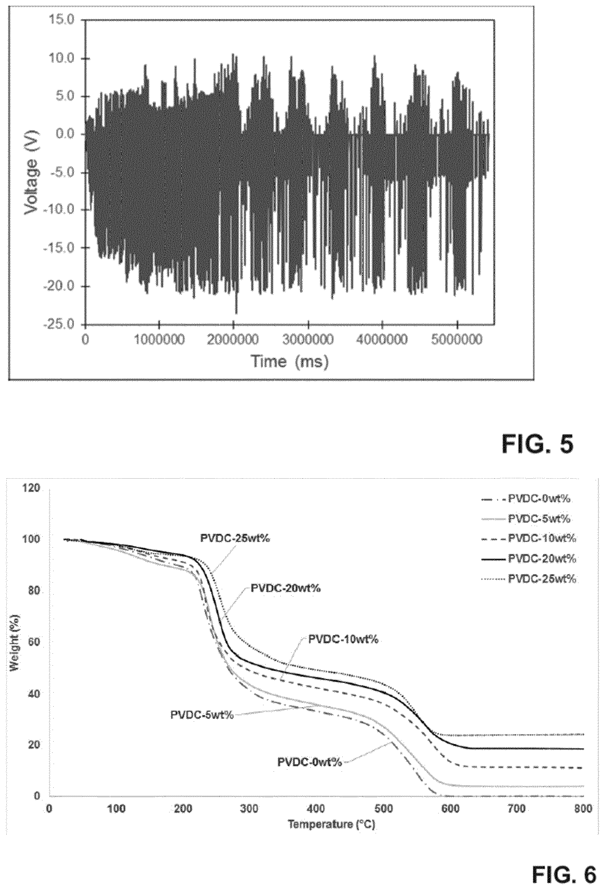

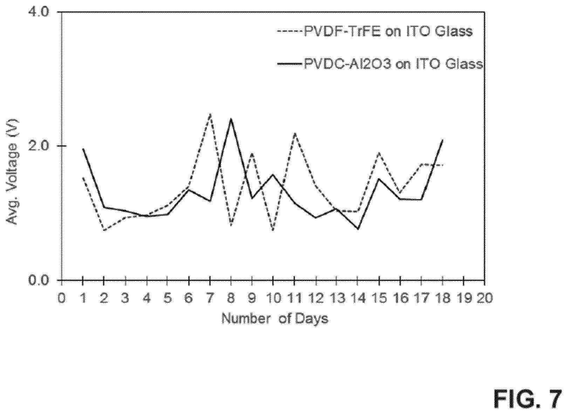

In some aspects, nanoparticles of Al₂O₃ have been doped into polymer matrix. Varying Al₂O₃ concentration in the nanocomposite matrix further improves the triboelectric properties of the final composite film. Additionally, the resulting nanocomposite exhibits relatively higher thermal stability (see, for example, FIG. 6) and robustness under real human touch conditions (see, for example, FIG. 7). The addition of metal oxide such as Al₂O₃) into polymer matrix may be achieved through an efficient and scalable process for the production of tribo-active materials, for various applications such as energy generation and harvesting.

With respect to thermal stability, the disclosed alumina nanocomposites of PVDC exhibit an improved stability over time compared to unfilled PVDC. As the alumina was introduced to a PVDC polymer resin matrix, the resulting nanocomposite showed improved values for thermal stability evidence by thermogravimetric analysis. With respect to real human touch conditions, the disclosed alumina nanocomposites of PVDC generated a voltage comparable to the voltage generated by conventional resin PVDF-TrFE based triboelectric films over 20 days.

The disclosed triboelectric-active film and sensor may be useful in a number of electric articles and devices. To better interact with humans, the next generation of electronic devices can use triboelectric sensors to interact with a human's sense of the touch. A triboelectric sensor may determine an amount of force applied to the sensor by a user, such as with their hand or fingers, and translate the applied force to an electrical signal. That electrical signal may be processed and transmitted to another device wirelessly, such that a user may provide input to a remote device. In some aspects, the triboelectric sensor may also be configured to provide power to components coupled to the triboelectric sensor. Thus, an external power supply for an electronic device that includes the triboelectric sensor may be optionally included or not included. Allowing the electronic device to operate without an external power supply improves the flexibility of the electronic device and increases the number of possible applications for the electronic device.

One example of an electronic device with a triboelectric sensor may be a light switch for a room. The triboelectric-based wall switch may simply be attached to the wall at the desired location without a need for an external power supply for the triboelectric-based wall switch. The possible installation location for the wall switch is flexible, whereas a conventional wall switch must be installed somewhere accessible for new wiring. Although a wall switch is described as one application for embodiments of the disclosure, other applications are possible. For example, an electronic device with a triboelectric sensor may be incorporated into consumer electronic devices, such as mobile devices, as power switches, as volume controls, or as another input device. Further, although a lighting fixture is described as a receiver, by means of radio frequency (RF) communication, the force sensitive device may communicate a touch event to a suitable RF reader that is connected directly to light bulbs or any other processing unit such as an automation system, light management system, personal computer, or a mobile device that is able to interrogate an RF enabled device. The applications can be used as a substitute or supplement to any mechanical switching system. These switches may not require wiring to the central unit and the installation is simpler. For example, the mechanical switches in vehicles (e.g., engine start, doors, windows, seats, etc.) can be controlled wirelessly according to embodiments of invention.

The disclosed triboelectric active film may be useful in a triboelectric sensor described herein. Triboelectric sensors may comprise a single bottom terminal that serves as a current collector. Because only a single bottom terminal is available, a supply voltage cannot be connected to the triboelectric sensor. Additionally, triboelectric sensors cannot produce sufficient current to energize and drive a single transistor. Triboelectric sensors produce a change in voltage instead of a change in resistance or capacitance.

A method may comprise receiving, by a sensing element from a triboelectric sensor, a voltage signal indicative of a contact event. The sensing element may comprise a thin film transistor. The method may comprise supplying, by a load element electrically coupled to the sensing element, a load to the sensing element. The triboelectric sensor, the sensing element, and the load element may be disposed on a flexible substrate. The method may comprise outputting, by the sensing element, an output signal indicative of the contact event.

### EXAMPLES

The following examples are put forth so as to provide those of ordinary skill in the art with a complete disclosure and description of how the compounds, compositions, articles, devices and/or methods claimed herein are made and evaluated, and are intended to be purely exemplary and are not intended to limit the disclosure. Efforts have been made to ensure accuracy with respect to numbers (e.g., amounts, temperature, etc.), but some errors and deviations should be accounted for. Unless indicated otherwise, parts are parts by weight, temperature is in °C or is at ambient temperature, and pressure is at or near atmospheric. Unless indicated otherwise, percentages referring to composition are in terms of wt %.

There are numerous variations and combinations of reaction conditions, e.g., component concentrations, desired solvents, solvent mixtures, temperatures, pressures and other reaction ranges and conditions that can be used to optimize the product purity and yield obtained from the described process. Only reasonable and routine experimentation will be required to optimize such process conditions.

### Preparation of triboelectric sensor

First, gamma alumina γ-Al₂O₃ pellets were ball milled using yttrium stabilized zirconia (YSZr) grinding beads (3 millimeter, mm) at 1000 revolutions per minute (rpm) for 1 hour (hr) to yield a fine powder in nanoparticulate size (50 nm to 100 nm). The fine powder was blended into PVDC in dimethylformamide (DMF) solvent (PVDC solution) with rigorous stirring using an overhead stirrer at 5000 rpm for 30 minutes. Nanocomposite formulations at different weight percentage (of alumina) were formed: 5 wt. %, 10 wt. %, 15 wt. %, 20 wt. %, 25 wt. % of alumina in PVDC matrix. The nanocomposite formulations were used to form triboelectric active films.

### Preparation of PVDC Solution

A 12 wt % solution of PVDC was prepared by dissolving in dimethylformamide DMF. A film was formed by spin coating at 500, 1000, 2000, 3000 rpm to yield a film thickness of 2.64, 2.0, 1.34 and 0.292 micrometers (µm), respectively.

### Fabrication of the Triboelectric Sensor

A 2.5 cm by 2.5 cm glass substrate having a layer of semiconductor material indium tin oxide (ITO) acting as an electrode was used to build the triboelectric sensor. The triboelectric sensor is connected through the ITO layer to a conventional resistor of 500 MΩ, as shown in FIG. 1.

The triboelectric active solution i.e. (0-25wt.%) gamma and boehmite Al₂O₃-PVDC was spin coated at 1000, 2000 and 3000 rpm at the ITO layer of the glass substrate to form a multi-layer film. The multi-layer film was then cured at about 50 °C for 1.5 hours under vacuum.

### Characterization of the Triboelectric Sensor

Triboelectric characterization of the multi-layer film was performed using an electrometer system. The electrometer system was connected to a LabVIEW programming platform, which continuously records the output voltage generated by the touch events (applied pressure) on the triboelectric active material.

A consistent touch event with a fixed force of around 3.2±0.5 N was applied to the triboelectric sensor that was connected to an electrometer to measure the output voltage. The sensor was connected to an external resistor of 500 MΩ. The results as shown in FIG. 2 demonstrate the dramatic increase of average voltage as the film thickness decreases, for both phases of alumina: boehmite and gamma. The results also imply that alumina phase has an insignificant effect on the overall performance of the triboelectric film. While no noticed effect of alumina does appear at thicker PVDC films, addition of alumina into the PVDC matrix significantly improved the output average voltage, for thinner films.

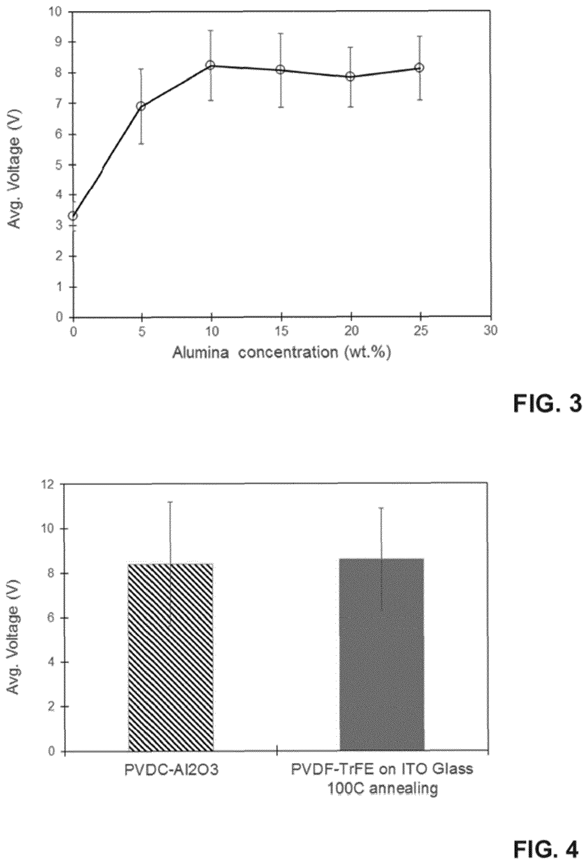

The effect of the concentration of alumina on the PVDC matrix was studied by preparing 5 different loading of alumina in the PVDC matrix ranging from 0 wt.% to 25 wt.% increments of 5 wt.%. The results are presented in FIG. 3 and feature two distinct regions: a first region showing a dramatic increase of average voltage with alumina concentration (0 wt. % to 10 wt. %); and a second region showing a substantially constant average voltage (10 wt. % to 20 wt. %). The second region is considered to be a saturation region where no more change in the average voltage takes place. Surprisingly, a higher alumina concentration (at greater than 10 wt. % to 25 wt. %, for example) did not appear to negatively influence the overall performance of the triboelectric sensor.

A comparative study was also conducted to evaluate the output performance of alumina-PVDC and a conventional triboelectric-active material: PVDF-TrFE. Two different type samples were prepared in single layer by spin coating using the material alumina-PVDC and PVDF-TrFE. The formulation is prepared by adding 1.2 grams of copolymer PVDF-TrFe to 10 g (10.1 millimeter, ml) of DMF solution which was then stirred until a clear 12 wt % PVDF-TrFe formulation is obtained. The film was prepared by solution coating at an ITO glass substrate. The results are very comparable, as shown in FIG. 4. Both materials, prepared in similar ways, show an overall average voltage of 8V implying that alumina-PVDC materials could be considered a reasonable alternative to PVDF-TrFE.

An evaluation of the performance stability of the disclosed triboelectric materials and sensor was performed. A cyclic test for the voltage (V) at a certain time (shown in milliseconds) was performed for 10 wt.% Al₂O₃-PVDC sensor device under normal room conditions: temperature of 23 °C, and relative humidity of about 56 %. As depicted in FIG. 5, the device performed steadily with almost no change on the triboelectric performance. For a significant change in triboelectric performance, a lower voltage (y-axis values) and decline to zero would be apparent.

The foregoing testing establishes that depositing the γ-Al₂O₃ as a nanofiller into a PVDC polymers matrix enhances the triboelectric output voltage. These nanocomposites were also evaluated for thermal stability via a thermogravimetric analysis (TGA). All the TGA analysis was done under air at a 10 °C/min heating rate and presents the mass while the temperature is changed over time. Results are presented in FIG. 6. A substantial decrease in weight of the PVDC (neat, 0 % alumina) occurred at 200-600 °C with the sharp drop at about 225 °C while entire decomposition occurred at 600 °C. The nanocomposite having γ-Al₂O₃ showed a good increase in thermal stability compare to the neat PVDC. Noticeably, the thermal stability increased with increasing the weight percentage of alumina nanofiller. At 5 wt. % γ-Al₂O₃, a slight enhancement in weight loss peak was observed at 232 °C. At 25 wt. % γ-Al₂O₃, the decomposition starting peak at 264 °C. The weight loss is mainly related to the evolution of HCl from the PVDC. Here the TGA study shows that γ-Al₂O₃ as a nanofiller increases the thermal properties of PVDC nanocomposites. Moreover, the thermal stability of the PVDC nanocomposites also improved with increasing γ-Al₂O₃ loading. Higher loading shows the higher thermal stability with entire PVDC decomposition at 600 °C.

The samples were also evaluated for the duration of time that the triboelectric activity was observed. FIG. 7, shows the newly synthesized alumina-PVDC triboelectrically active materials stability compared against state-of-art materials PVDF-TrFE under finger touch testing up to 20 days. It was observed that alumina-PVDC (PVDC-Al₂O₃ on ITO glass) retained the triboelectric properties very well under real human touch test. The results were comparable regarding the average voltage observed. The PVDC-AL₂O₃ on ITO glass even exhibited a higher voltage on day 18. Where human touch considered to be contaminated sweat, moisture, and dirt. Table 1 presents the observed average voltages.

**Table 1. Average voltage over 20 days for PVDC-Al₂O₃ and PVDF-TrFE.**

| | PVDF-TrFE | PVDC-Al₂O₃ | |
|---|---|---|---|
| **Day** | **Avg. Voltage** | **Avg. Voltage** | **Difference** |
| 1 | 1.534 | 1.957 | +0.276 |
| 2 | 0.750 | 1.096 | +0.462 |
| 3 | 0.934 | 1.039 | +0.112 |
| 4 | 0.974 | 0.958 | -0.016 |
| 5 | 1.120 | 0.986 | -0.119 |
| 6 | 1.401 | 1.348 | -0.037 |
| 7 | 2.473 | 1.188 | -0.520 |
| 8 | 0.820 | 2.415 | +1.944 |
| 9 | 1.904 | 1.229 | -0.355 |
| 10 | 0.752 | 1.583 | +1.106 |
| 11 | 2.191 | 1.157 | -0.472 |
| 12 | 1.413 | 0.941 | -0.334 |
| 13 | 1.036 | 1.071 | +0.034 |
| 14 | 1.029 | 0.768 | -0.254 |
| 15 | 1.906 | 1.517 | -0.204 |
| 16 | 1.311 | 1.216 | -0.072 |
| 17 | 1.729 | 1.208 | -0.302 |
| 18 | 1.716 | 2.087 | +0.216 |

The present disclosure relates at least to the following aspects.
Aspect 1. A composite comprising: a polymer resin matrix; and an alumina filler, wherein the alumina filler is present in an amount from about 5 wt. % to about 40 wt. % based on the total weight of the composite.
Aspect 2. The composite, wherein the polymer resin matrix comprises polyvinylidene chloride, polyvinyl chloride (PVC), polyvinylidene chloride (PVDC), crosslinked polycarbonate-fluorinated polyhedral oligomeric silsesquioxane (XPC-F-POSS), poly(vinylidenefluoride-co-trifluoroethylene, (PVDF-TrFE), Polyvinylidene chloride-alumina (PVDC-Al₂O₃), fluorinated-polymers, or a combination thereof.
Aspect 3. The composite of aspect 1, wherein the polymer resin matrix comprises polyvinylidene chloride
Aspect 4. The composite of aspect 1, wherein the alumina filler is nano-particle sized.
Aspect 5. The composite of any of aspects 1-4, wherein the alumina filler has an average particle size of from about 50 to about 1000 nm.
Aspect 6. The composite of any of aspects 1-4, wherein the alumina filler has an average particle size of from about 500 to about 1000 nm.
Aspect 7. The composite of any of aspects 1-4, wherein the alumina filler is dispersed throughout the polymer resin matrix.
Aspect 8. The composite of any of aspects 1-4, wherein the alumina filler is dispersed at a surface of the polymer resin matrix.
Aspect 9. The composite of any of aspects 1-6, wherein the alumina filler comprises one or more phases of aluminum (III) oxide.
Aspect 10. The composite of any of aspects 1-7, wherein the alumina filler is gamma phase of alumina.
Aspect 11. The composite of any of aspects 1-7, wherein the alumina filler is boehmite phase of alumina.
Aspect 12. An article comprising the composite of any of aspects 1-11.
Aspect 13. A triboelectric sensor comprising the composite of any of aspects 1-11.
Aspect 14. A triboelectric sensor comprising: a substrate; a triboelectric active film, wherein the triboelectric active film is formed from a composite comprising polymer resin matrix and an alumina filler; and a conductive film disposed adjacent the substrate, wherein the triboelectric sensor generates an average of at least 4 V when evaluated using a consistent touch event with a fixed force of about 3.2 ± 0.5 N and connected to an external resistor of 500 MΩ.
Aspect 15. The triboelectric sensor of aspect 14, wherein the polymer resin matrix comprises polyvinylidene chloride.
Aspect 16. The triboelectric sensor of any of aspects 14-15, wherein the conductive film comprises indium tin oxide.
Aspect 17. The triboelectric sensor of any of aspects 14-15, wherein the triboelectric active film comprises from about 5 wt. % to about 30 wt. % of alumina based on the total weight of the composite.
Aspect 18. The triboelectric sensor of any of aspects 14-17, wherein the alumina is nano-particle sized.
Aspect 19. The triboelectric sensor of any of aspects 14-18, wherein the alumina is dispersed a polymer resin matrix.
Aspect 20. The triboelectric sensor of any of aspects 14-19, wherein the alumina is gamma, or boehmite, or alpha phase of alumina or a combination thereof.
Aspect 21. The triboelectric sensor of any of aspects 14-19, wherein the alumina is gamma phase of alumina.
Aspect 22. The triboelectric sensor of any of aspects 14-19, wherein the alumina is alpha phase of alumina.
Aspect 23. The triboelectric sensor of any of aspects 14-22, wherein the triboelectric active film has a thickness of about 0.2 mm to about 2 mm.

### Definitions

It is also to be understood that the terminology used herein is for the purpose of describing particular aspects only and is not intended to be limiting. As used in the specification and in the claims, the term "comprising" can include the embodiments "consisting of' and "consisting essentially of." Unless defined otherwise, all technical and scientific terms used herein have the same meaning as commonly understood by one of ordinary skill in the art to which this disclosure belongs. In this specification and in the claims which follow, reference will be made to a number of terms which shall be defined herein.

As used herein, the term "combination" is inclusive of blends, mixtures, alloys, reaction products, and the like.

Ranges can be expressed herein as from one value (first value) to another value (second value). When such a range is expressed, the range includes in some aspects one or both of the first value and the second value. Similarly, when values are expressed as approximations, by use of the antecedent 'about,' it will be understood that the particular value forms another aspect. It will be further understood that the endpoints of each of the ranges are significant both in relation to the other endpoint, and independently of the other endpoint. It is also understood that there are a number of values disclosed herein, and that each value is also herein disclosed as "about" that particular value in addition to the value itself. For example, if the value "10" is disclosed, then "about 10" is also disclosed. It is also understood that each unit between two particular units are also disclosed. For example, if 10 and 15 are disclosed, then 11, 12, 13, and 14 are also disclosed.

As used herein, the terms "about" and "at or about" mean that the amount or value in question can be the designated value, approximately the designated value, or about the same as the designated value. It is generally understood, as used herein, that it is the nominal value indicated ±10% variation unless otherwise indicated or inferred. The term is intended to convey that similar values promote equivalent results or effects recited in the claims. That is, it is understood that amounts, sizes, formulations, parameters, and other quantities and characteristics are not and need not be exact, but can be approximate and/or larger or smaller, as desired, reflecting tolerances, conversion factors, rounding off, measurement error and the like, and other factors known to those of skill in the art. In general, an amount, size, formulation, parameter or other quantity or characteristic is "about" or "approximate" whether or not expressly stated to be such. It is understood that where "about" is used before a quantitative value, the parameter also includes the specific quantitative value itself, unless specifically stated otherwise.

As used herein, the terms "optional" or "optionally" means that the subsequently described event or circumstance can or cannot occur, and that the description includes instances where said event or circumstance occurs and instances where it does not. For example, the phrase "optional additional additives" means that the additional additives can or cannot be included and that the description includes compositions that both include and do not include additional additives.

Disclosed are the components to be used to prepare the compositions of the disclosure as well as the compositions themselves to be used within the methods disclosed herein. These and other materials are disclosed herein, and it is understood that when combinations, subsets, interactions, groups, etc. of these materials are disclosed that while specific reference of each various individual and collective combinations and permutation of these compounds cannot be explicitly disclosed, each is specifically contemplated and described herein. For example, if a particular compound is disclosed and discussed and a number of modifications that can be made to a number of molecules including the compounds are discussed, specifically contemplated is each and every combination and permutation of the compound and the modifications that are possible unless specifically indicated to the contrary. Thus, if a class of molecules A, B, and C are disclosed as well as a class of molecules D, E, and F and an example of a combination molecule, A-D is disclosed, then even if each is not individually recited each is individually and collectively contemplated meaning combinations, A-E, A-F, B-D, B-E, B-F, C-D, C-E, and C-F are considered disclosed. Likewise, any subset or combination of these is also disclosed. Thus, for example, the sub-group of A-E, B-F, and C-E would be considered disclosed. This concept applies to all aspects of this application including, but not limited to, steps in methods of making and using the compositions of the disclosure. Thus, if there are a variety of additional steps that can be performed it is understood that each of these additional steps can be performed with any specific aspect or combination of aspects of the methods of the disclosure.

References in the specification and concluding claims to parts by weight of a particular element or component in a composition or article, denotes the weight relationship between the element or component and any other elements or components in the composition or article for which a part by weight is expressed. Thus, in a compound containing 2 parts by weight of component X and 5 parts by weight component Y, X and Y are present at a weight ratio of 2:5, and are present in such ratio regardless of whether additional components are contained in the compound.

A weight percent of a component, unless specifically stated to the contrary, is based on the total weight of the formulation or composition in which the component is included. As used herein the terms "weight percent," "wt%," and "wt. %," which can be used interchangeably, indicate the percent by weight of a given component based on the total weight of the composition, unless otherwise specified. That is, unless otherwise specified, all wt% values are based on the total weight of the composition. It should be understood that the sum of wt% values for all components in a disclosed composition or formulation are equal to 100.

Unless otherwise stated to the contrary herein, all test standards are the most recent standard in effect at the time of filing this application. Each of the materials disclosed herein are either commercially available and/or the methods for the production thereof are known to those of skill in the art. It is understood that the compositions disclosed herein have certain functions. Disclosed herein are certain structural requirements for performing the disclosed functions and it is understood that there are a variety of structures that can perform the same function that are related to the disclosed structures, and that these structures will typically achieve the same result.

Throughout this document, values expressed in a range format should be interpreted in a flexible manner to include not only the numerical values explicitly recited as the limits of the range, but also to include all the individual numerical values or sub-ranges encompassed within that range as if each numerical value and sub-range is explicitly recited. For example, a range of "about 0.1% to about 5%" or "about 0.1% to 5%" should be interpreted to include not just about 0.1% to about 5%, but also the individual values (e.g., 1%, 2%, 3%, and 4%) and the sub-ranges (e.g., 0.1% to 0.5%, 1.1% to 2.2%, 3.3% to 4.4%) within the indicated range. The statement "about X to Y" has the same meaning as "about X to about Y," unless indicated otherwise. Likewise, the statement "about X, Y, or about Z" has the same meaning as "about X, about Y, or about Z," unless indicated otherwise. The term "about" as used herein can allow for a degree of variability in a value or range, for example, within 10%, within 5%, or within 1% of a stated value or of a stated limit of a range, and includes the exact stated value or range. The term "substantially" as used herein refers to a majority of, or mostly, as in at least about 50%, 60%, 70%, 80%, 90%, 95%, 96%, 97%, 98%, 99%, 99.5%, 99.9%, 99.99%, or at least about 99.999% or more, or 100%. While "about" permits some tolerance, a person of ordinary skill in the art would read the specification in light of his knowledge and skill for guidance on the level of that tolerance, and be reasonably apprised to a reasonable degree the metes and bounds of the claims.

In this document, the terms "a," "an," or "the" are used to include one or more than one unless the context clearly dictates otherwise. The term "or" is used to refer to a nonexclusive "or" unless otherwise indicated. The statement "at least one of A and B" has the same meaning as "A, B, or A and B." In addition, it is to be understood that the phraseology or terminology employed herein, and not otherwise defined, is for the purpose of description only and not of limitation. Any use of section headings is intended to aid reading of the document and is not to be interpreted as limiting; information that is relevant to a section heading may occur within or outside of that particular section.

In the methods described herein, the acts can be carried out in any order without departing from the principles of the invention, except when a temporal or operational sequence is explicitly recited. Furthermore, specified acts can be carried out concurrently unless explicit claim language recites that they be carried out separately. For example, a claimed act of doing X and a claimed act of doing Y can be conducted simultaneously within a single operation, and the resulting process will fall within the literal scope of the claimed process.

The term "radiation" as used herein refers to energetic particles travelling through a medium or space. Examples of radiation are visible light, infrared light, microwaves, radio waves, very low frequency waves, extremely low frequency waves, thermal radiation (heat), and black-body radiation. The term "UV light" as used herein refers to ultraviolet light, which is electromagnetic radiation with a wavelength of about 10 nm to about 400 nm.

The term "cure" as used herein refers to exposing to radiation in any form, heating, or allowing to undergo a physical or chemical reaction that results in hardening or an increase in viscosity.

The term "coating" as used herein refers to a continuous or discontinuous layer of material on the coated surface, wherein the layer of material can penetrate the surface and can fill areas such as pores, wherein the layer of material can have any three-dimensional shape, including a flat or curved plane. In one example, a coating can be applied to one or more surfaces, any of which may be porous or nonporous, by immersion in a bath of coating material.

The term "surface" as used herein refers to a boundary or side of an object, wherein the boundary or side can have any perimeter shape and can have any three-dimensional shape, including flat, curved, or angular, wherein the boundary or side can be continuous or discontinuous. While the term surface generally refers to the outermost boundary of an object with no implied depth, when the term 'pores' is used in reference to a surface, it refers to both the surface opening and the depth to which the pores extend beneath the surface into the substrate.

As used herein, the term "polymer" refers to a molecule having at least one repeating unit and can include copolymers and homopolymers. The polymers described herein can terminate in any suitable way. In some embodiments, the polymers can terminate with an end group that is independently chosen from a suitable polymerization initiator, -H, -OH, a substituted or unsubstituted (C₁-C₂₀)hydrocarbyl (e.g., (C₁-C₁₀)alkyl or (C₆-C₂₀)aryl) interrupted with 0, 1, 2, or 3 groups independently selected from -O-, substituted or unsubstituted -NH-, and -S-, a poly(substituted or unsubstituted (C₁-C₂₀)hydrocarbyloxy), and a poly(substituted or unsubstituted (C₁-C₂₀)hydrocarbylamino).

As used herein, the term "transparent" (or substantially transparent) means that the level of transmittance for a disclosed composition is greater than 50%. It is preferred that the transmittance be at least 60%, 70%, 80%, 85%, 90%, or 95%, or any range of transmittance values derived from the above exemplified values. In the definition of "transparent", the term "transmittance" refers to the amount of incident light that passes through a sample measured in accordance with ASTM D1003 at a thickness of 3.2 millimeters.

Method examples described herein can be machine or computer-implemented at least in part. Some examples can include a computer-readable medium or machine-readable medium encoded with instructions operable to configure an electronic device to perform methods as described in the above examples. An implementation of such methods can include code, such as microcode, assembly language code, a higher-level language code, or the like. Such code can include computer readable instructions for performing various methods. The code may form portions of computer program products. Further, in an example, the code can be tangibly stored on one or more volatile, non-transitory, or non-volatile tangible computer-readable media, such as during execution or at other times. Examples of these tangible computer-readable media can include, but are not limited to, hard disks, removable magnetic disks, removable optical disks (e.g., compact disks and digital video disks), magnetic cassettes, memory cards or sticks, random access memories (RAMs), read only memories (ROMs), and the like.

All publications mentioned herein are incorporated herein by reference to disclose and describe the methods and/or materials in connection with which the publications are cited. The above description is intended to be illustrative, and not restrictive. For example, the above-described examples (or one or more aspects thereof) may be used in combination with each other. Other embodiments can be used, such as by one of ordinary skill in the art upon reviewing the above description. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed embodiment. Thus, the following claims are hereby incorporated into the Detailed Description as examples or embodiments, with each claim standing on its own as a separate embodiment, and it is contemplated that such embodiments can be combined with each other in various combinations or permutations. The scope of the disclosure should be determined with reference to the appended claims, along with the full scope of equivalents to which such claims are entitled.

## Claims

1. A composite comprising:
a polymer resin matrix; and
an alumina filler, wherein the alumina filler is present in an amount from about 5 wt. % to about 40 wt. % based on the total weight of the composite.

2. The composite, wherein the polymer resin matrix comprises polyvinylidene chloride, polyvinyl chloride (PVC), polyvinylidene chloride (PVDC), crosslinked polycarbonate-fluorinated polyhedral oligomeric silsesquioxane (XPC-F-POSS), poly(vinylidenefluoride-co-trifluoroethylene, (PVDF-TrFE), Polyvinylidene chloride-alumina (PVDC-Al₂O₃), fluorinated-polymers, or a combination thereof.

3. The composite of claim 1, wherein the polymer resin matrix comprises polyvinylidene chloride

4. The composite of claim 1, wherein the alumina filler is nano-particle sized.

5. The composite of any of claims 1-4, wherein the alumina filler has an average particle size of from about 50 to about 1000 nm.

6. The composite of any of claims 1-4, wherein the alumina filler has an average particle size of from about 500 to about 1000 nm.

7. The composite of any of claims 1-4, wherein the alumina filler is dispersed throughout the polymer resin matrix.

8. The composite of any of claims 1-4, wherein the alumina filler is dispersed at a surface of the polymer resin matrix.

9. The composite of any of claims 1-6, wherein the alumina filler comprises one or more phases of aluminum (III) oxide.

10. The composite of any of claims 1-7, wherein the alumina filler is gamma phase of alumina.

11. The composite of any of claims 1-7, wherein the alumina filler is boehmite phase of alumina.

12. An article comprising the composite of any of claims 1-11.

13. A triboelectric sensor comprising the composite of any of claims 1-11.

14. A triboelectric sensor comprising:
a substrate;
a triboelectric active film, wherein the triboelectric active film is formed from a composite comprising polymer resin matrix and an alumina filler; and
a conductive film disposed adjacent the substrate,
wherein the triboelectric sensor generates an average of at least 4 V when evaluated using a consistent touch event with a fixed force of about 3.2 ± 0.5 N and connected to an external resistor of 500 MΩ.

15. The triboelectric sensor of claim 14, wherein the polymer resin matrix comprises polyvinylidene chloride.
